Europäisches Patentamt

European Patent Office

Office européen des brevets

(19)

(11) Publication number: **0 188 811**
A2

(12)

# EUROPEAN PATENT APPLICATION

(21) Application number: 85116534.0

(51) Int. Cl.⁴: **C 03 C 13/00**, C 03 C 25/06

(22) Date of filing: 23.12.85

(30) Priority: 24.12.84 US 685822

(71) Applicant: **PPG INDUSTRIES, INC., One PPG Place, Pittsburgh Pennsylvania 15272 (US)**

(43) Date of publication of application: **30.07.86 Bulletin 86/31**

(72) Inventor: **Beaver, Richard Paul, 1524 Annette Avenue, Library Pennsylvania 15129 (US)**

(84) Designated Contracting States: **BE CH DE FR GB IT LI NL**

(74) Representative: **Sternagel, Hans-Günther, Dr. et al, Patentanwälte Dr. Michael Hann Dr. H.-G. Sternagel Sander Aue 30, D-5060 Bergisch Gladbach 2 (DE)**

(54) **Silica-rich, porous solid and hollow fibers and method of producing same.**

(57)    Porous silica-rich fibers and strands are produced to have good porosity including a pore volume of up to 1.2 cc/gm and pore diameters of up to 3,000 Angstroms without resorting to alkaline leaching which extracts silica from the skeleton of the fiber. The porous solid or hollow silica-rich fibers are produced by forming glass fibers having an alkali metal borosilicate glass composition wherein present in weight percent of the composition are: boron-containing material from 40 to 60, silica from at least 25 to about 80, alkali metal oxides from about 1 to about 15 weight percent. Other glass forming components may also be present. The alkali metal borosilicate glass fibers are water leached to extract components other than silica from the glass fibers to produce the porous silica-rich fibers or strands. If the starting glass fibers are hollow glass fibers, the resulting porous silica-rich fibers are hollow silica-rich fibers. In addition, the glass fibers can be heat treated to phase separate the glass into a boron-rich phase and a silica-rich phase before water leaching and the resultant heat treated glass fibers can be leached by water and acid or a mixture thereof where one leaching step is subsequent to the other. The glass fibers can be formed in a limited moisture environment or the glass fibers can be sized with an aqueous carbonaceous containing sizing composition which can be removed before water leaching or which can be acid leached with subsequent oxidation of any residual carbonaceous material.

## SILICA-RICH, POROUS SOLID AND HOLLOW FIBERS AND METHOD OF PRODUCING SAME

The present invention is directed to a method of producing distinct, porous, solid or hollow, silica-rich fibers, which in some cases have large enough diameters to be capillaries or tubes, where the fibers have a pore volume up to around 1.2 cc/gm and a mean pore diameter up to 3000 $\overset{O}{A}$ and the so-produced porous silica-rich fibers.

Numerous methods exist in the art for producing pores in various forms of glass such as beads, fibers, capillaries and tubes. Glass fibers have been treated variously with heat treatments for phase separation of phase separable glass followed by leaching with acids and/or alkali material to produce pores in the glass fibers. For example, in U.S. Patents 2,215,039; 2,221,709 and 2,286,275 (Hood et al.) glass fibers made from the alkali metal borosilicate ternary glass system have been heat treated to phase separate the acid leachable materials from the silica and acid treated to remove the phase separated acid leachable materials. In addition, the acid leached glass fibers which are silica-rich, can be alkali leached to extract some silica for greater porosity as shown in U.S. Patent 4,042,359.

Porous glasses have been investigated for various applications such as ultrafiltration, reverse osmosis, gaseous separations, gaseous liquid separations, liquid liquid separations, salt extraction, physiological or ion exchange membranes, catalyst supports, and more thermally stable, silica-rich insulation and fabrics and for use in fabrication of rocket nozzles and jet liners.

Many of the foregoing applications require larger pore volumes and/or pore diameters for efficient operation. As mentioned in U.S. Patent 4,042,359, pore size can be enlarged by alkali leaching of the porous silica-rich fibers to partially dissolve the silica (silicon dioxide) structure. The removal of silica to enlarge the pores in a porous, silica-rich fiber or any silica-rich fiber removes the material responsible for the structural integrity and support in the porous fiber.

It is an object of the present invention to provide porous solid or hollow silica-rich fibers with large pore volumes and pore diameters without alkaline leaching of the silica-rich fibers, so that structural silica need not be removed from the silica-rich fibers.

## SUMMARY OF THE INVENTION

The present invention accomplishes the aforementioned objects and other objects gleaned from the following disclosure by providing porous solid or hollow, silica-rich fibers from alkali metal borosilicate glass fibers that have an amount of boric oxide from around 40 to around 60 weight percent, an amount of silica of at least 25 to about 80 weight percent and an amount of alkali metal oxide from around 1 to about 15 weight percent.

In the invention, the porous, solid or hollow, silica-rich fibers are produced with a high degree of porosity by forming the solid or hollow alkali metal borosilicate glass fibers and at least water leaching the glass fibers to extract nonsiliceous materials. The porous, silica-rich fibers have a pore volume up to around 1.2 cc/gm and a mean pore diameter up to 3,000 Å and either a broad or narrow pore distribution without the necessity of removing any silica through alkaline leaching. In addition, the glass fibers can be heat treated before water leaching and they can be acid leached after water leaching.

## DETAILED DESCRIPTION OF THE INVENTION

For a better understanding of the invention the term "extractable" for a group of components refers to metal oxides and associated materials which are leachable from the glass fibers with or without heat treatment by water and/or acids other than hydrofluoric and phosphoric acids. These latter acids cannot be used, since they attack silica. The term "boron-containing material" refers to boron, boron oxide, boron anhydride and alkali metal borates and the like. Also the term "nonextractable" for the group of components refers to silica, which is not leachable from the glass by acids other than hydrofluoric and phosphoric acids, although it is leachable by alkaline substances. Also the terms "associated material" refers to reaction products of the components of the extractable group with components of the nonextractable group because of their proximity to each other in the glass fibers. Nonexclusive examples of associated materials include alkali metal borates, alkali metal aluminates and the boron oxide-aluminum oxide reaction products and the like.

The porous solid or hollow silica-rich fibers of the present invention are prepared from a formulated fiberizable, pore generating alkali metal borosilicate glass forming batch composition. The batch composition is formulated to enable the resulting glass fibers to have the requisite quantities of the boron-containing, silica, and alkali metal oxides components. Typical batch materials known to those skilled in the art can be used and calculated by known methods to produce the glass fibers with the requisite amount of the components. In the pore generating glass fiber composition, the components and any affiliated materials of the extractable group, which is a boron-rich group, include one or more boron-containing materials and/or alkali metal oxides like sodium oxide, potassium oxide and lithium oxide, and any alkaline earth metal oxides like bivalent oxides of calcium and/or magnesium. With the presence of the boron-containing material, especially boron oxide, along with alkali metal oxides in the glass composition, the glass fibers have

- 4-

a reduced melting point and are readily formed from the batch composition. The chief component of the nonextractable group is silica making this group a silica-rich group. In addition, other components may be present which are associated with either or both the extractable and nonextractable groups. These include any aluminum oxide, other glass forming ingredients, fluxes, fining agents, alkali metal carbonates and aluminates. These included materials, if present, are present in amounts which do not adversely affect phase separation or leaching. Typical fining agents include sulfates, halides, ammonium salts, nitrates, peroxides, chlorates, $Sb_2O_3$ and the like. Preferably, the composition of the pore generating glass fibers, the borate-rich group, includes the one or more boron-containing materials, the alkali metal oxides, and any alkaline earth metal oxides. The silica-rich group has the siliceous material such as silica and possibly some aluminum oxide.

The concentration of boron-containing material, and affiliated materials having boron in the glass can range from about 40 to about 60 weight percent, and preferably around 50 to around 54 weight percent. The amount of boron-containing material should not be too great that the softening point of the glass fibers is decreased to cause the fibers to stick together during heat treatment. This tackiness complicates the maintenance of individual fiber identity and, for discrete lengthy fibers, maintenance of any near parallel alignment during subsequent processing steps. Glass fiber compositions with the high concentrations of boron-containing materials, i.e., 40 to around 60, weight percent of the total glass composition are phase separable by heat treatment, although heat treatment is not necessary to produce silica-rich fibers having a high pore volume. With these glass fibers having the higher amounts of boron-containing materials, care should be taken to avoid moisture attack before heat treatment or leaching of the fibers.

The amount of silica in the glass fibers to result in the silica-rich group should not be less than around 25 and preferably not less than 30 weight percent of the total glass composition. Generally, the siliceous material is less than around 80, preferably less than around 70 weight percent of the total glass composition. Also there may be present as part of the siliceous material a small amount of metal oxides of Group IV of the Periodic Chart of Elements.

Particularly useful glass fibers, which may or may not be heat treated are formed from fiberizable batch compositions, where the fibers have silica at 30 to 50 percent by weight, boric oxide at 40 to 55 percent by weight, alkali metal oxides at 5 to 15 percent by weight, and aluminum oxide from 0 to 4 weight percent. The most preferred glass composition contains boric oxide at 54 weight percent, sodium oxide at 8.0 weight percent and silica at 38 weight percent.

In the method of preparing solid or hollow fibers, strands, capillaries and tubes, the glass compositions are the attenuatable glass compositions and for the fibers they are fiberizable compositions. These attenuated forms can be formed by gaseous blown flame, centrifugal or mechanical attenuation of the fibers, capillaries or tubes, or any other procedures known by those skilled in the art. Also, the fibers can be formed as hollow fibers as described in U.S. Patents 3,268,313; 3,421,873; and 3,510,393, all of which are hereby incorporated by reference, either through indirect or direct melt formation. The capillaries or tubes can be formed by any method known in the art; for instance, by the method shown in U.S. Patent 4,042,359, hereby incorporated by reference.

One particular, non-exclusive method of forming solid glass fibers is to melt a fiberizable glass batch composition in a glass batch melting furnace at the requisite temperature and time for the particular glass composition. Generally, the temperature range is from about 2000°F (1093°C) to about 3000°F (1649°C) for around 1 to about 6 hours or longer. The molten glass is attenuated through bushing tips located at the bottom of the heated glass fiber forming bushing which contains the molten glass. The fibers may be cooled by air conditioning and/or by water from pre-pad spray jets as they leave the bushing. It is preferred that the fibers are not contacted with water to assist in cooling the fibers to avoid any premature leaching of the fibers. The diameter of the fibers formed from the bushings can vary from the submicron range to a diameter for capillaries or tubes. For the fibers, the diameters range from about 1 micron to less than around 150 microns. The lengths of the fibers, strands, capillaries and tubes can be continuous in that their lengths can be cut into any desired lengths, which are capable of being processed further in heat treatment and leaching. Generally, the lengths range from about 1/32 of an inch (.03 inch, .08 cm) for the chopped fibers to many feet for tubular shapes. The attenuation of the fibers is conducted by mechanical means (winding or chopping) or thermal means by using heated fluid flow. Any other method of forming and attenuating the fibers as known by those skilled in the art can also be used. The fibers may be cooled, treated with a chemical protecting agent, i.e., a sizing composition, and gathered into one or more strands and chopped or collected as continuous fibers or strands by any method known to those skilled in the art, for example, U.S. Patents 4,071,339 and 4,049,411 are typical of such methods.

The solid or hollow glass fibers can have a sizing composition applied to the glass fibers to protect the glass fibers from interfilament abrasion in further processing steps. The sizing composition, which is usually present for fibers or strands that undergo subsequent handling, can be applied in art known quantities by any method known to those skilled in the art. The sizing composition is usually an aqueous composition with water soluble, dispersible or emulsifiable chemical agents that are placed on the glass fibers and remain on the glass fibers after the water and/or solvent is evaporated. The chemical agents on the glass fibers may also be easily removable through solubility in certain solvents. An example of a suitable water soluble chemical treatment is a cationic lubricant in water which is applied to the glass fibers. A suitable cationic lubricant includes Cation X® material, which is an alkyl imidazoline reaction product of tetraethylene

- 7-

pentamine and stearic acid. Other suitable material include textile softeners and cationic lubricants or agents generally known to those skilled in the art such as those disclosed in U.S. Patent 4,002,445 (Graham).

After the sizing composition is applied to the solid or hollow glass fibers, the fibers are gathered into one or more strands, usually by means of a gathering shoe and then the glass fibers are wound onto a rotating drum-type winder having a forming tube to produce a forming package. The collet on which the forming package rides usually rotates at high speeds to collect the strand or strands into the forming package. Such speeds can be upward of 4,400 revolutions per minute which continues until the winder is slowed to a stop and a forming package is removed. An example of the forming process including sizing, gathering and collecting the glass fibers into a forming package is disclosed in U.S. Patent 4,071,339 (Griffiths) and U.S. Patent 4,049,411 (Long and Dent) where attenuation speeds of from about 2,000 to 20,000 feet per second are achieved.

The solid or hollow glass fibers and/or strands that are collected into the forms of multilayered packages, either forming packages or roving packages, or into the forms of chopped fibers or strands, chopped or continuous fiberous or strand mats or batts are treated for pore generation. The fibers or strands may be removed from the packages by cutting or rewinding onto larger diameter drums or can remain in the packages, mat, batt or chopped strand form for the generation of pores. Preferably the strands are cut from one or more multilayered packages by making one or more cuts through the layers in a lengthwise manner extending parallel to the lengthwise axis of the package. The length of the cut glass fibers can be varied by varying the diameter of the forming package during winding of the glass fibers or by rewinding the glass fibers from the forming package onto a smaller or larger diameter package. The many layers of glass fibers which are removed from the package can be laid flat on a supporting surface. The supporting surface can be a plate or tray or moving conveyor belt. Generally, the discrete lengths of glass fibers obtained by this approach can range from about 1 inch to around 25 inches (2.54 cm to 63.5 cm). Any other method for removing the glass fibers from the multilayered package can be employed. For example, the fibers can be unwound from the package and disposed as chopped strand or continuous strand onto another supporting surface or holder or rotating drum. Preferably, the discrete lengths of glass fibers can range from about 0.25 inch (0.64 cm) to around 70 inches (180 cm) and most preferably only up to around 25 inches (64 cm).

Before the pores are generated in the glass fibers as fibers or strands through extraction, any sizing composition present can be removed through a solvent wash such as a water wash to remove a water soluble sizing composition. It is preferred not to remove the sizing composition from the glass fibers, since the sizing composition appears to play a protecting role in any heat treating and acid leaching steps used in extracting the extractable components in generating pores.

The extraction to generate pores in the glass can be accomplished merely by water leaching or by water and/or acid leaching or by heat treatment and water and/or acid leaching. The pores that are generated should have a diameter across some portion of the opening of the pore, whether the pore is circular, elliptical, cylindrical or asymmetrical in shape, to yield the desired mean pore diameter. The mean pore diameter of the pores generated can have a broad or narrow distribution.

Without heat treating the solid or hollow glass fibers, the fibers can be water leached. The fibers are immersed in a vessel having water or are deluged with water, when the fibers are horizontally disposed in nearly parallel alignment in a vessel. The water surrounding the fibers is preferably agitated and can be replenished if the water becomes alkaline. The temperature of the water leach is preferably an elevated temperature and the time of leaching can vary from less than an hour to several days. After water leaching, the fibers or strands may be acid leached to remove any residual extractable components. Generally after water leaching without heat treatment, the silica-rich fibers have a pore volume of around 0.3 to around 0.85 cc/gm and a broad distribution of pore sizes having a mean pore diameter in the range of about 8 $\overset{o}{A}$ and especially greater than 50 $\overset{o}{A}$ to about 3,000 $\overset{o}{A}$.

In addition, the glass fibers can be and preferably are heat treated for phase separation. The fibers are heat treated in a furnace or on a heated drum on which they were wound. The heat treatment is usually at a temperature greater than the annealing temperature and less than the softening point temperature of the glass. The temperature of heat treatment can assist in controlling the porosity of the glass fibers as taught for glass in U.S. Patent 3,758,284. Generally, the phase separable, glass fibers are heat treated at a temperature in the range of about 420°C to about 600°C for a period of time from about 10 minutes to several days. Longer times require lower temperatures while shorter times require higher temperatures in these ranges for equal pore diameters. Most preferably, the fibers without any carbonaceous containing sizing composition are heat treated from about 420°C to about 480°C for up to around 6 hours to phase separate the glass into the components of the borate-rich phase and the acid insoluble components of the silica-rich phase. These lower heat treating temperatures are useful to decrease any glass fibers from sticking together, while the presence of a carbonaceous sizing composition also prevents such sticking together and allows utilization of higher heat treating temperatures. Afterwards, the fibers are cooled to ambient temperatures.

For glass fibers to be heat treated at the higher temperatures, the glass fibers have been treated with a sizing composition and have been dried to form a residue on a substantial portion of the surfaces of the treated glass fibers. The residue formation can vary from air drying to drying at elevated temperatures or treating in a reaction environment, i.e., temperature, pressure or radiant energy to produce the various forms of coverings, i.e., film, coating, residue or reaction products. The residue should be substantially free of moisture for aqueous chemical treatments and should be substantially free of liquids for organic chemical treatments. The presence of too much liquid or water on the glass fibers could have an adverse effect, when the glass fibers are heat treated for phase separation. Generally, the residue can contain less than around 20 weight percent moisture and preferably less than around 10 weight percent moisture. The formation of the residue can occur by any method known to those skilled in the art in covering distinct solid articles with a fluid and in any type of apparatus for forming coverings. It is preferred that in producing these glass fibers, the amount of the aqueous chemical treatment with carbonaceous material is applied in such an amount that upon winding the glass fiber strand or strands into the forming package, the glass fibers are adequately dried to form a dried residue of the chemical treatment on a substantial portion of the surfaces of the glass fibers. In other cases, covering formation could be accomplished by air drying for a sufficient period of time, or by drying at elevated temperatures for a sufficient period of time for removal of moisture or organic solvents or for conducting a chemical reaction of reactants in the chemical treatment to result in a carbonaceous residue.

During heat treatment of the glass fibers with the carbonaceous residue at the conventional temperatures of about 400°C (725°F) to about 600°C (1112°F) some of the carbonaceous residue is removed. The removal usually occurs through carbonization. As long as enough of the residue is present during a majority of the duration of heat treatment, prevention of the fibers from sticking together can be accomplished. Preferably, some of the residue remains after completion of the time for heat treatment. It has been found that the carbonaceous residue on the heat treated glass fibers also protects the fibers from abrasion in the water and/or acid leaching steps. During the leaching steps, additional amounts of the carbonaceous residue are released from the glass fibers.

- 11-

After the glass fibers have been heat treated and phase separated, they are cooled and subjected to an extraction process. The extraction process, whether for the heat treated fibers or for the non-heat treated fibers involves either water leaching alone or acid leaching alone or water leaching followed by acid leaching. In the water leach, the glass fibers are immersed in a water bath to leach out the soluble borate-rich phase. The temperature of the leaching water bath should be about 80 to 100°C with about 90 to about 100°C being preferred. As the temperature of the water bath falls below 80°C there is less thorough extraction, and there must be a substantial increase in extraction time. In addition to the solubility of the borate-rich phase, (alkali metal borate salts such as sodium pentaborate) increases with temperature. At a water temperature of 90 to 100°C, the solubility of the borate-rich phase is very high. The time of leaching depends on the temperature of the water bath and the filament diameter of the fibers being treated. At a preferred temperature range of about 90 to 100°C, a leaching time of from about 2 to 24 hours, preferably about 6 to 8 hours is suitable for fiber diameters in the range of around 1 to 150 microns. In addition, it has been found that the fibers retain greater strengths if the leaching is started cold, since this has a tendency to reduce stress cracks, for example, less cracks will develop if the leaching is started at room temperature or slightly below and the temperature gradually is raised to 90 to 100°C over the period of about 2 to 4 hours, than if leaching is conducted for the entire 6 to 8 hours at 90 to 100°C. The volume ratio of water to porous glass fibers in the leaching should be about 2 to 8 volumes of water to 1 volume of glass. A low water to glass ratio slows the leaching process while a higher ratio serves no particular advantage.

If the fibers are to be acid leached after water leaching, the glass fibers are transferred usually while still wet to an acid bath for a second leaching. Useful acids are dilute solutions, typically in the range of from 0.1 to 3 Normal solutions of mineral acids such as

- 12-

hydrochloric, sulphuric and nitric acid or organic acid such as oxalic acid. Acids which attack silicas such as hydrofluoric acid or phosphoric acid or the like should not be used. The concentration of the acid and the time and temperature of the acid leaching will depend on the amount of extractable components remaining in the water-leached glass fibers. Higher normality acids, that is, from 2 to 3 Normal are used when the preceding phase separation through heat treatment has not been complete with considerable portions of alkali and borate remaining within the silica skeleton. However, when the preceding phase separation through heat treatment has been complete with most of the borate and alkali located in coalesced phases throughout the silica skeleton, leaching and lower normality acids, that is, 0.1 to 0.3 Normal are satisfactory. In general, an acid leach at a temperature of from about 80 to 100°C for at least one-half hour, preferably about 2 to about 6 hours is satisfactory. It does not appear that the time and temperature of acid leaching have any measurable affect on the development of stress in the fibers. Thus, long acid extractions at relatively high temperatures can be used. However, there appears to be no substantial advantage to acid leaching for a period of time greater than 6 hours. The volume ratio of acid to glass fibers in the acid leaching should be about 2 to 8 volumes of acid to 1 volume of glass fibers. This ratio will vary somewhat with the normality of the acid being used. In general, the higher the normality of the acid, the lower the acid to fiber ratio. It should be noted that the leaching process as described above is for the most part on laboratory scale, but commercialized production scale would incorporate large scale and continuous procedures such as continuous countercurrent extraction so as to obtain an efficient and economical process.

The resulting porous solid or hollow, silica-rich fibers from heat treated glass fibers have a mean pore diameter of around 30 $\overset{e}{A}$ to about 3,000 $\overset{e}{A}$ with a narrow distribution of pore sizes. The pore volume for the fibers is in the range of about 0.3 to about 1.2 cc/gm.

After the acid leaching or water leaching step, the fibers are washed to remove all traces of the soluble phase, which are yet remaining and also any insoluble impurities, such as iron, which may have been acted upon by the acid. Washing may be accomplished by immersing the glass fibers for about 1 to 4 hours in running tap water, or preferably deionized water, in such a manner as to expose all of the pores of the glass fibers to the action of the water. A washing in deionized water is preferred because the resultant fibers may have better thermal stability than fibers washed with tap water. After washing, the fibers are usually air dried in an air circulating oven usually at 80 to 100°C to remove water and then dried at 760°C for 1 hour to remove chemically bond water.

If the dried porous silica-rich fibers had a carbonaceous sizing composition present during heat treatment, remaining carbonaceous material or residue of carbon may be present. Preferably, the amount of the coating on the glass fibers was an effective LOI (loss on ignition) so that some of the carbonaceous residue remains after both heat treatment and the one or more leaching steps. The remaining residue can range from a disintegrated covering containing carbon to a recognizable covering with pores. The remaining carbonaceous residue or carbon is removed by oxidation from the fibers. The oxidation is preferably conducted at a temperature in the range of about 800°F (427°C) to about 1300°F (704°C) for an effective period of time to remove the carbon or carbonaceous material, and most preferably around 1000°F (538°C) for a period of time of up to around 2 hours. In oxidizing any remnants of the carbonaceous residue from the porous silica-rich fibers, the temperature of the oxidation treatment should be less than around 1093°C (2000°F) if shrinkage of the porous fibers including large scale pore shrinkage and collapse is to be avoided. The porous silica-rich fibers should be oxidized at a temperature of less than around 1300°F (704°C) to avoid too much degradation in the strength of the porous fibers. The time of the oxidation treatment depends on the amount of the carbonaceous material originally applied. If larger than necessary amounts were applied, then longer times may be required. The oxidizing environment is provided by air, oxygen, ozone or a mixture thereof or by the presence of oxygen yielding salts such as $KNO_3$, $KClO_3$ and the like. Preferably, the oxidizing environment is provided by a constant flow of dry air around the fibers in the heat treating zone. The heat treating zone can be any oven or furnace that accommodates the oxidizing environment at elevated temperatures.

The resulting porous solid or hollow silica-rich fibers have a mean pore diameter or around 8 $\overset{o}{A}$ to about 3000 Angstroms and a pore volume in the range of about 0.2 to about 1.2 cc/gm. The fiber diameters are generally in the range of 3 microns to about 150 microns or more and the length of the fibers can vary from those of chopped glass fiber strands of less than 1/4 of an inch (0.64 cm) to continuous fibers and strands. The silica-rich fibers usually have an amount of silica in excess of 85 weight percent and preferably around 95 to 100 weight percent. The hollow porous silica-rich fibers with discrete lengths can have a surface area including both external and internal surface areas of around 50 to around 400 or more $m^2$/gm depending on pore size. The porous silica-rich fibers can be utilized in many applications. The fibers can have various chemicals such as catalysts, enzymes and biomaterials such as antibodies and cells immobilized in or around the pores. Also the fibers can be placed in reactors or containers for desalination of water or for performing chemical separations. Also the porous, solid or hollow silica-rich fibers can be condensed by heat treatment to produce nonporous solid or hollow fibers. The fibers can be passed through a furnace or oven at a temperature of about 700°C but less than the melting point of the silica-rich fiber. Preferably, the heat treatment is less than about 1100°C. The heat treatment dehydrates and shrinks the fibers to nonporous solid or hollow, silica-rich fibers depending upon whether the porous solid or porous hollow fibers were heat treated.

## PREFERRED EMBODIMENT OF THE INVENTION

The glass forming fiberizable pore generating batch composition is formulated by back calculations to result in glass fibers that are heat treatable for phase separation into the boron-rich phase and the silica-rich phase like alkali metal borosilicate glass compositions. The formulation also allows for removal of a substantial portion of the former group through water and acid leaching without the necessity of alkali leaching to achieve discrete lengths of glass fibers with sufficient pore diameters and volume.

The glass fiber forming batch most preferably provides fibers with a glass composition having about 54 weight percent $B_2O_3$, 8 weight percent $NaO_2$, and about 38 weight percent $SiO_2$. This glass composition is formed by melting the batch at about 2282°F (1250°C) for 2 hours and is formed into glass fibers at about 1610°F (877°C) by mechanical attenuation from a bushing. The fibers formed have a diameter in the range of about 3 microns to about 120 microns and most preferably about 10 microns to about 40 microns. Most preferably, the fibers are formed into hollow glass fibers with an outer diameter in the aforementioned range and an internal diameter to give a K factor in the range of up to about 0.9. The K factor is the ratio of inner diameter to outer diameter. The air flow to the hollow fiber bushing is satisfactory to result in the desired K factor and for a ten tip bushing is usually in the range of greater than 0 to about 0.5 cfm (cubic feet per minute) (0.0002 $m^3$/sec.).

The glass fibers are sized with an aqueous chemical treating composition preferably having a film forming polymer like epoxy resin, which is water soluble, dispersible or emulsifiable, and water soluble lubricant like Cation-X® lubricant and a compatible organosilane coupling agent like an epoxy silane. The fibers are gathered into one or more strands and wound into a cylindrical forming package.

A plurality of undried forming packages are cut along their longitudinal axes so that all of the layers of glass fibers can be removed from the apckage. These fibers are laid straight on trays in a nearly parallel alignment, where the fibers usually have a discrete length of about 25 inches (63.5 cm).

The fibers are heat treated at a temperature in the range of about 420°C to about 600°C for a period of time from about 10 minute to several days. Longer times require lower temperatures while shorter times require higher temperatures in these ranges. For the glass fibers with higher amounts of boron-containing materials, lower heat treating temperatures are useful to decrease any sticking together of the glass fibers, while the presence of a protective size allows utilization of higher heat treating temperatures. Afterwards, the fibers are cooled to ambient temperatures.

The glass fibers are leached with water, followed by an acid leach. In the water leach, the glass fibers are immersed in a water bath for a sufficient period of time, at a sufficient temperature to remove a substantial amount, if not all, of the water soluble boron-containing compounds in the glass fibers. The glass fibers are submerged in the water when the water is cool and the temperature of the water is increased to an elevated temperature preferably around 80 to 100°C, most preferably around 95°C, for 1 to about 24 hours, preferably 3 hours. It is preferred that the water leaching step be performed in a vessel that accommodates agitation which is performed during the water leaching step. If the temperature of the water bath falls below 80°C, there is less thorough leaching and there must be a substantial increase in the leaching times. The time of leaching depends on the temperature of the bath and size of the fiber being treated. In order to keep the fibers aligned during the leaching process, they are immobilized usually by placing a rod perpendicular to the long axis of the fibers to hold them stationary. The volume ratio of water to glass fibers in the leaching bath can be about 2 to 8 volumes of water to one volume of glass fibers. Low water to glass fiber volume ratios slow the leaching process while higher volume ratios serve no particular advantage.

After water leaching, the glass fibers are removed from the water solution. The glass fibers are then acid leached, with agitation, a dilute acid solution, such as 0.1 to about 3 Normal, preferably, about 0.1 to 0.5 Normal hydrochloric acid, at temperatures around 80°C to 100°C, preferably 90°C, for about 10 minutes to about 8 hours, preferably about 2 to about 4 hours. In the acid leach, the glass fibers are immersed in the acid bath for a sufficient period of time, at a sufficient temperature to remove a substantial amount, if not all, of the acid soluble boron-containing compounds in the glass fibers. The glass fibers are submerged in the acid when the acid is cool and the temperature of the acid is increased to the elevated temperature. Generally, the dilute acid solution removes any remaining traces of boron, alkali metal oxides and alkali metal borates so that the pores are unplugged of this material. Nonexclusive examples of other suitable dilute solutions of acids include sulphuric and nitric acid, or organic acids such as oxalic acid. The volume ratio of acid to glass fibers in the acid leaching step can be about 1 to about 8 volumes of acid of one volume of glass fibers which will vary somewhat with the normality of the acid. The glass fibers are removed from the acid leaching solution, water washed to a pH of around 5.5 to neutral in the wash water after which the fibers are dried, preferably in air drying at around 90°C for around 10 minutes to about 24 hours.

The porous glass fibers are subjected to air oxidation to remove any carbonaceous residue in the pore that may result from the sizing composition being present on the glass fibers during heat treatment. The temperature of oxidation is that sufficient to oxidize carbon in the presence of an adequate amount of flowing dry reconstituted air and it is most preferably at around 1000°F (537°C) or higher for about 20 minutes up to about 2 hours. The oxidation temperature should not be of such magnitude that the glass vitrifies and closes the pores.

The invention is further elucidated but not limited by the following example.

- 18-

The glass compositions of Samples 1-3 listed in Table 1 are useful in producing porous solid or hollow, silica-rich fibers with or without heat treatment. The porous fibers have a high degree of porosity without the necessity of resorting to removal of silica from the skeleton of the porous fiber by alkaline leaching.

## EXAMPLES

### Table I

| SAMPLES | WEIGHT % | | | | | |
|---------|----------|--------|---------|---------|-----------|-----|
|  | $B_2O_3$ | $Na_2O$ | $SiO_2$ | $ZrO_2$ | $Al_2O_3$ | CaO |
| 1 | 54.0 | 8.0 | 38.0 | -- | -- | -- |
| 2 | 41.0 | 8.0 | 51.0 | -- | -- | -- |
| 3 | 54.0 | 8.0 | 35.0 | 3 | -- | -- |

### Example 1

A batch composition calculated to yield glass fibers of Sample 1 of Table I was melted in platinum crucibles at 2282°F (1250°C) for 1 hour with occasional stirring. A 10 nozzle glass fiber bushing which was electrically heated, was charged with melted glass forming batch and conditioned at 2000°F (1093°C) for 1 hour to remove seeds from the melt. The current to the bushing was adjusted and the tip plate was then set for a 1600°F (871°C) temperature and the melt thermocouple read 1687°F (919°C). Glass fibers were formed by mechanical attenuation onto an 8 inch collet that was rotated at 295 RPM to form 70 micron solid fibers. During their formation, the fibers were treated with an aqueous chemical treatment of U.S. Patent 4,049,597 without any hydrogenated corn oil, and without any anionic and cationic emulsifiers and with the addition of magnesium chloride as an antistatic agent. The fibers were sliced off of the resulting package in multiple layers of 25" long fibers x 70 micron OD. The fibers were cut from the collet and laid out in a heat treating furnace for phase separation. During heat treatment, the binder began to oxidize, however, some of the carbon was entrapped in the fiber surfaces, probably in high boron areas. After heat treatment, the fiber was grey to black in appearance. The color is dependent on fiber OD and binder pickup.

The fibers were leached for 6 hours at 95°C in distilled water and at 95°C in 0.2N HCl. During leaching, some carbon was released from the glass forming a carbon film on the bath surface. These fibers were water washed until neutral, then dried overnight at 110°C in flowing dry air. Additional tests showed that heat treatment in air for 2 hours at 1000°F was sufficient to remove all residual carbon.

## Example 2

A batch composition calculated to yield the desired oxide amounts in the glass composition of Sample 1 of Table I was melted in platinum crucibles at 2282°F (1250°C) for 1 hour with occasional stirring. A 10 nozzle glass fiber bushing was charged with glass and conditioned at 2000°F (1093°C) for 1 hour to remove seeds from the melt. The tip plate was then set for a 1600°F (871°C) temperature and the melt thermocouple reads 1687°F (919°C). Glass fibers were formed by mechanical attenuation onto an 8 inch collet that was rotated at 295 RPM to form 70 micron solid fibers. During their formation, the fibers were treated with an aqueous solution having 0.5 weight percent Cation-X[®] lubricant and 0.5 weight percent gamma-glycidoxypropyltrimethoxy silane. The fibers were sliced off of the package resulting in multiple layers of 25" (63.5 cm.) long fibers x 70 micron OD.

The fibers were laid on a flat surface were heat treated for 6 hours at 540°C in a Blue-M muffle furnace. The phase separated fibers were cooled slowly to prevent thermal shock over a 1 hour period to ambient temperature.  After cooling, the fibers were placed in 6 volumes of water (4.0 micron mhos/cm) in multilayered near parallel alignment and maintained in this position by a retaining bar.  The water was heated to 95°C in 1/2 hour and held with gentle agitation for 6 hours.

After leaching a substantial amount of the boron and sodium oxides from the fiber, the water should be drained, and 0.3N HCl was introduced into the bath and heated to 95°C.  The fibers were soaked in this bath for 4 hours with agitation.  The HCl was drained and the fibers were washed with distilled water until a pH of around 5.5 to neutral was achieved.  The fibers were then dried in flowing air at 95°C for 4 hours.  Traces of residual carbon were removed from the leached fiber by a 2 hour oxidation treatment in air at 1000°F (538°C).

I CLAIM:

1. Process of producing porous, silica-rich fibers with good porosity from alkali metal-borosilicate glass fibers without the need for alkali leaching of the glass fibers characterized by:

    a. forming glass fibers to have an alkali metal borosilicate glass composition having in weight percent about 40 to about 60 boron-containing components, and at least 25 to about 80 silica and about 1 to about 12 alkali metal oxide,

    b. water leaching the glass fibers to extract the nonsilicaceous materials to produce the porous, silica-rich fibers having a pore volume up to 1.2 cc/gm and a mean pore diameter of up to 3,000 Angstroms.

2. Process of Claim 1, wherein the glass fibers are formed to also have minor amounts of alkaline earth metal oxides selected from divalent oxides of calcium and magnesium, aluminum oxide, metal oxides of Group IV of the Periodic Chart or mixtures thereof and trace amounts of fluorine, and ferric oxide.

3. Process of Claims 1-2, wherein the water leaching is conducted at a temperature in the range of 80 to 100°C for a time of around 1 hour to more than 24 hours.

4. Process of Claims 1-3, wherein the fibers are formed to have a diameter of from around 1 micron to over 250 microns to constitute capillaries and tubes.

5. Process of Claims 1-4, wherein the glass fibers are formed to have a length ranging from less than 1/4 inch (0.64 cm) to continuous lengths.

6. Process of Claims 1-5, wherein the glass fibers are formed into hollow fibers having a K factor of up to about 0.9.

7. Process of Claims 1-6, which includes acid leaching the water leached glass fibers.

8. Process of Claim 7, wherein the acid leaching is conducted in dilute acid solutions of acids other than hydrofluoric or phosphoric acids at a temperature in the range of about 80 to about 100°C and for a time of less than 1 hour to around 6 hours.

9. Process of Claims 1-8 which includes heat treating the formed glass fibers at a temperature in the range of 420 to 480°C to phase separate the boron-rich phase and the silica-rich phase before the fibers are water leached.

10. Process of Claims 1-9, wherein forming of the glass fibers occurs in an environment of limited moisture.

11. Process of Claims 1-10, wherein in forming the glass fibers, the glass fibers are sized with a carbonaceous containing sizing composition, the sized glass fibers are heat treated at a temperature in the range of around 420 to around 600°C for phase separate the boron-rich phase from the silica-rich phase, the heat treated glass fibers are leached with water or acid or a mixture thereof, the porous, silica-rich fibers are heat treated to oxidize any residual carbonaceous material.

12. Process of Claims 1-11, wherein the glass fibers are formed to have a boron oxide content of around 54 weight percent, a silica content of around 38 weight percent and a sodium oxide content of around 8 weight percent.

13. Process of Claims 1-12, wherein forming the porous, silica-rich fibers includes:

    a. attenuating the glass fibers in a limited moisture environment,

    b. gathering the fibers into at least one strand,

    c. collecting the at least one or more strand in a multilayered package on a winder, and

    d. removing the multiple layers of at least one glass fiber strand from at least one package to maintain an approximate parallel alignment between the fibers.

14. Porous, silica-rich fibers produced by the processes of Claims 1-13.

15. Porous, silica-rich fibers produced by the process of Claims 1-13, where the fibers have a pore volume of 0.2 to 1.2 cc/gm and a pore diameter up to 3,000 Angstroms having substantially the same amount of silica as was present in the glass fibers from which the porous silica-rich fibers were produced.